# EUROPEAN PATENT APPLICATION

(11) **EP 2 511 829 A2**
(43) Date of publication of application: **17.10.2012**
(21) Application number: 12153316.0
(22) Date of filing: 31.01.2012
(51) Int. Cl.: G06F 13/38

(54) **External device**

(30) Priority: 31.01.2011 US 201161438123 P; 31.01.2011 US 201161438139 P; 31.01.2011 US 201161438140 P; 14.02.2011 US 201161442379 P
(71) Applicant: Kuster, Martin, 6318 Walchwil (CH)
(72) Inventor: Kuster, Martin, 6318 Walchwil (CH)
(74) Representative: Phillips & Leigh

(57) **Abstract**

Described are external devices (12) having a plurality of substrates (14), a connector (12) electrically coupled to one of the plurality of substrates and having first interface connectors and second interface connectors, a hub (92) or switch (84) electrically coupled to the first interface connectors, wherein the switch includes a display position and a memory position, a first interface connection controller (16) electrically coupled to the memory position of the switch, a display controller (86) electrically coupled to the display position of the switch, a display (22) may be electrically coupled to the display controller, and a second interface connection controller (18) electrically coupled to the second interface connectors, wherein the first interface connectors and the second interface connectors are configured to support at least two interface connection standards with interfaces that are mechanically different.

## Description

### FIELD OF THE INVENTION

The invention relates to mobile storage devices and the like external devices.

### BACKGROUND

Universal Serial Bus ("USB") and External Serial Advanced Technology Attachment ("eSATA") are two types of commonly used standards for connectors. Each of these standards have undergone rapid development since their inception.

The USB standard that governs the design of the USB connections has undergone several revisions since its earliest release in 1994. The first widely adopted version, USB 1.1, specified data rates of 1.5 Mbit/s ("Low-Bandwidth") and 12 Mbit/s ("Full-Bandwidth"). USB 1.1 was replaced by USB 2.0 in 2000. USB 2.0 provided a higher maximum data transfer rate of 480 Mbit/s ("Hi-Speed"). In this version, the USB 2.0 cable has four wires: two wires for power (+5 volts and ground) and a twisted pair of wires for carrying data. In the USB 2.0 design, as well as USB 1.1, data is transmitted in one direction at a time (downstream or upstream).

In 2008, a new USB 3.0 standard was announced. USB 3.0 includes a new "SuperSpeed" bus, which provides a fourth data transfer rate of 5.0 Gbit/s. In order to achieve this increased throughput, the USB 3.0 cable has a total of eight wires: two wires for power (+5 volts and ground), the twisted pair for carrying non-SuperSpeed data (allows backward compatibility with earlier versions of USB devices), and two differential pairs for carrying SuperSpeed data. Full-duplex signaling occurs over the two differential pairs. To date, adoption of the USB 3.0 standard has been slow due to the need to re-design motherboard hardware that supports the USB 3.0 standard, and the need to revise operating systems to support the USB 3.0 standard.

Traditionally, SATA is an internal computer bus interface for connecting host bus adapters to mass storage devices. First generation SATA interfaces ("SATA I") specified data transfer rates 1.5 Gbit/s. Second generation SATA interfaces ("SATA II") specified data rates of 3.0 Gbit/s. All SATA data cables meeting the SATA spec are rated for 3.0 Gbit/s. In 2009, the third generation SATA interface ("SATA III") was released, specifying a peak throughput of 6 Gbit/s. The SATA III standard is backwards compatible with SATA II. eSATA was standardized in 2004 and provides a variant of the SATA protocols for external connectively. In each version of eSATA ("eSATA I", "eSATA II", and "eSATA III"), the hardwire includes two differential pairs of wires, plus an additional three ground wires. Because eSATA uses the same ATA protocol as a computer's internal hard drive, a bridge chip is not needed to translate from the computer's internal ATA protocol to another protocol, such as USB. However, while most computers use SATA standards internally, many computers do not include external SATA connectors, opting instead to include external USB connectors.

Because eSATA connectors are not yet widely available, it is desirable to provide eSATA connectors that include full backward and forward compatibility between the SATA I, II, and III standards, in combination with USB connectors that include full backward and forward compatibility between the USB 2.0 and 3.0 standards.

In recent years, external devices have been provided with electronic displays for communicating information about the device. Traditionally, these displays are conventional backlit flat panel displays that emit light and require a source of power to operate. Because these external devices are often transported and/or stored without access to power, the displays are not readily accessible. Thus, it may be desirable to provide a display for an external device that does not require a power source for the information on the display to be visible.

### STATEMENT OF INVENTION

An external device in accordance with the present invention and features therefore are defined by the appended claims.

### SUMMARY

Features of the invention may comprise an external device having a plurality of substrates, a connector electrically coupled to one of the plurality of substrates and comprising first interface connectors and second interface connectors, a switch electrically coupled to one of the plurality of substrates and to the first interface connectors, wherein the switch comprises a display position and a memory position, a first interface connection controller electrically coupled to one of the plurality of substrates and to the memory position of the switch, a display controller electrically coupled to one of the plurality of substrates and to the display position of the switch, a display electrically coupled to the display controller, and a second interface connection controller electrically coupled to one of the plurality of substrates and to the second interface connectors, wherein the first interface connectors and the second interface connectors are configured to support at least two interface connection standards with interfaces that are mechanically different.

In some features, a hub is electrically coupled to one of the plurality of substrates and to the first interface connectors, the first interface connection controller is electrically coupled to one of the plurality of substrates and to the hub, and a display controller is electrically coupled to one of the plurality of substrates and to the hub. In other features, the plurality of substrates are arranged in a stacking relationship, wherein each substrate is mechanically mounted and electrically coupled to at least one other substrate in the plurality of substrates.

In some features, the external device may further comprise an electronic detector, wherein the first interface connection controller and the second interface connection controller are electrically coupled to the electronic detector. The electronic detector may be configured to enable the second interface connection controller when a second interface connection is present.

In some features, information displayed on the display is visible when the connector is not connected to a corresponding connector. In other features, the display is a bi-stable LCD or e-Paper device. According to certain features, the first interface connectors may be USB 3.0 connectors. In these or other features, the second interface connectors may be eSATA connectors.

### BRIEF DESCRIPTION OF THE DRAWINGS

Figure 1 is a front perspective view of an external device according to certain features of the present invention.

Figure 2 is a front perspective view of the external device of Figure 1 with the outer casing shown in broken lines.

Figure 3 is a rear perspective view of the external device of Figure 1 with the outer casing shown in broken lines.

Figure 4 is a top plan view of the external device of Figure 1 with the outer casing shown in broken lines.

Figure 5 is a left side elevation view of the external device of Figure 1 with the outer casing shown in broken lines.

Figure 6 is a rear elevation view of the external device of Figure 1 with the outer casing shown in broken lines.

Figure 7 is a left side elevation view of the external device of Figure 1 with the outer casing removed.

Figure 8 is a rear perspective view of the external device of Figure 1 with the outer casing removed.

Figure 9 is a top perspective view of the external device of Figure 1 with the outer casing removed.

Figure 10 is a top plan view of a first substrate, a bottom plan view of a second substrate, and a bottom plan view of a third substrate of the external device of Figure 1.

Figure 11 is a bottom plan view of the first substrate of the external device of Figure 1.

Figure 12 is a top plan view of the second substrate of the external device of Figure 1.

Figure 13 is a diagram of an electronics apparatus of an external device according to certain features of the present invention.

Figure 14 is a diagram of an electronics apparatus of an external device according to certain features of the present invention.

### DETAILED DESCRIPTION

The described features of the invention provide external devices for use with multiple interface connection standards. While the designs may be discussed for use with eSATA and USB standards, they are by no means so limited. Rather, features of these designs may be used for other devices that couple to any type of serial bus connection, parallel bus connection, or otherwise as desired.

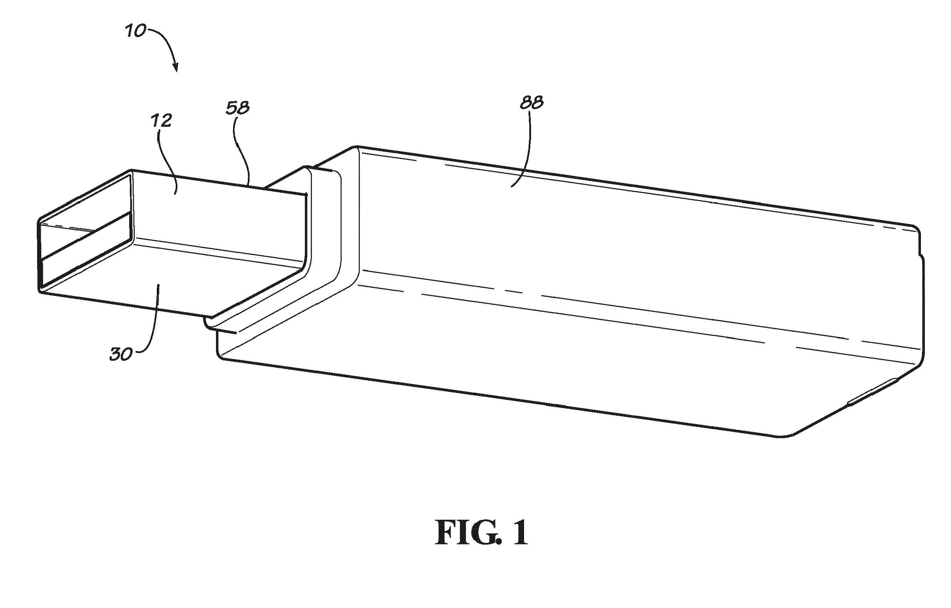

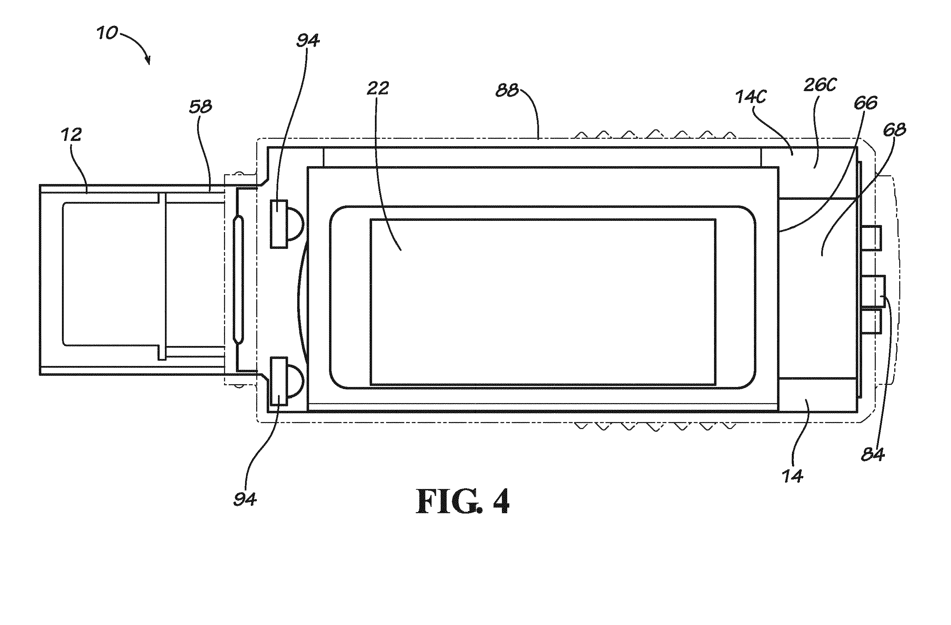

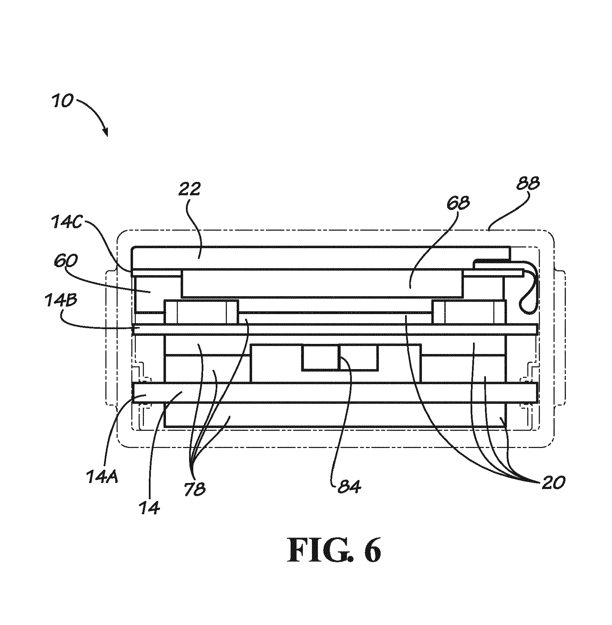

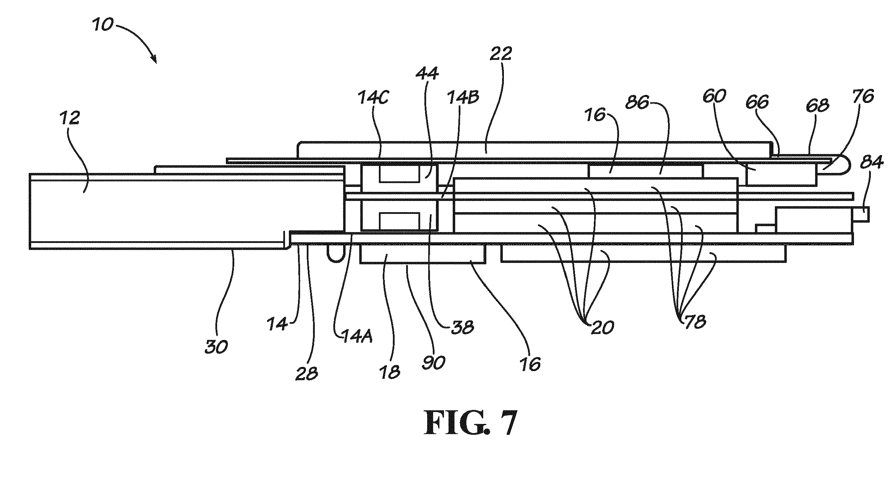

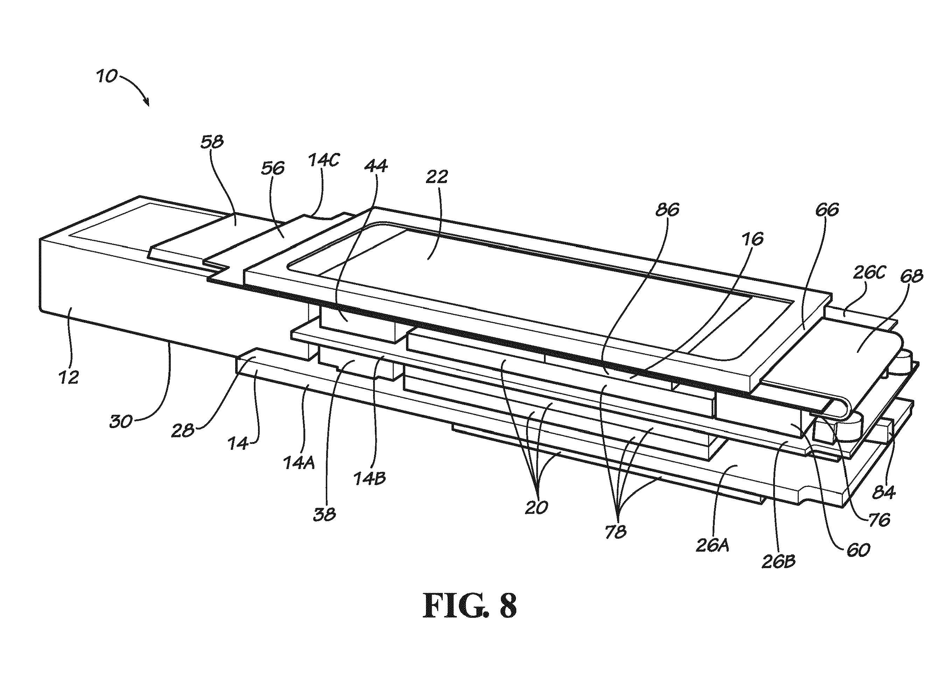

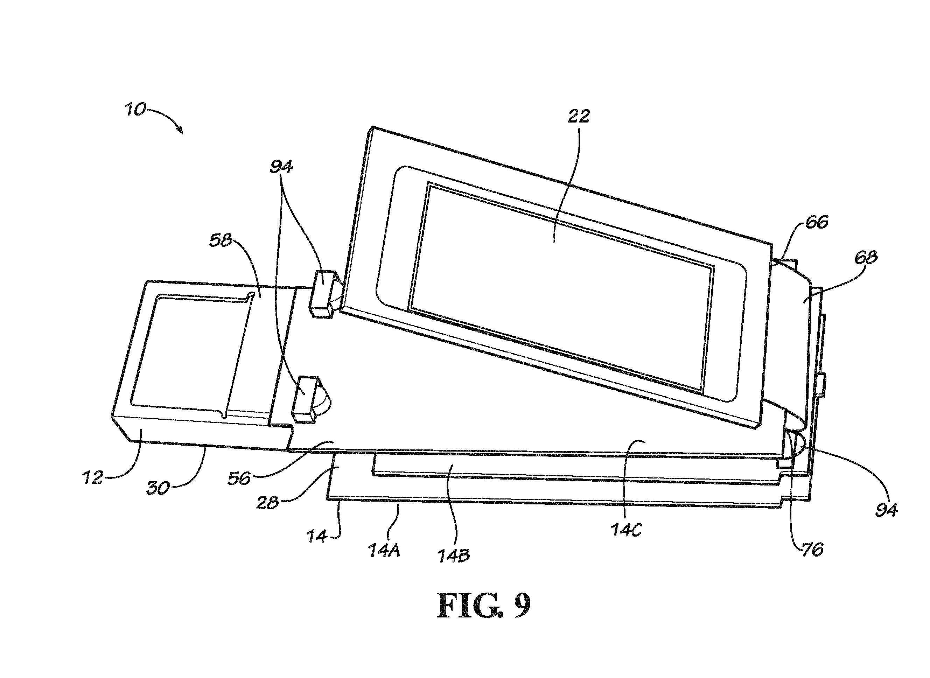

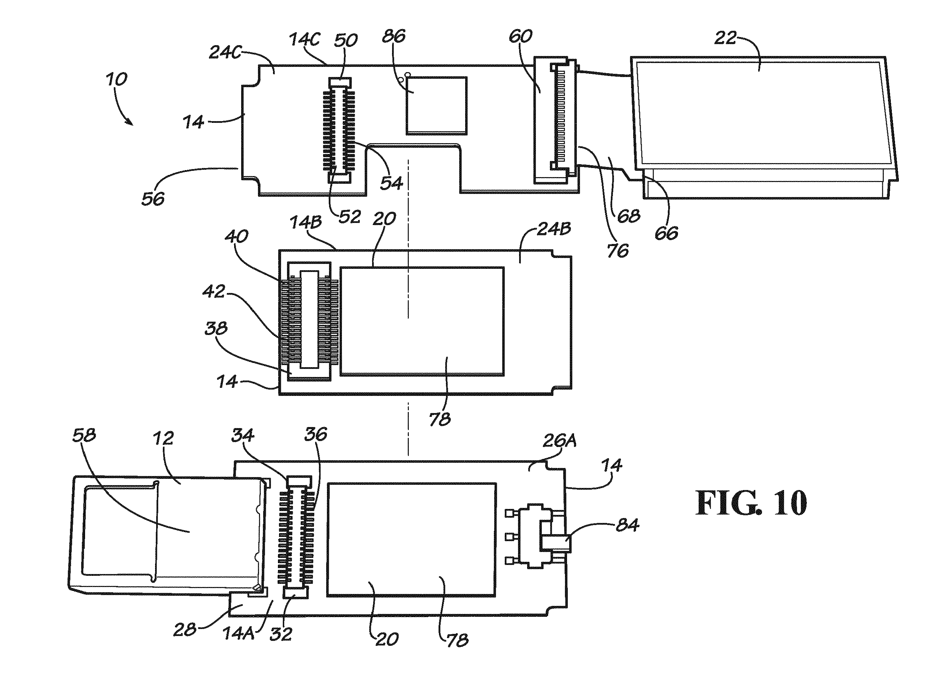

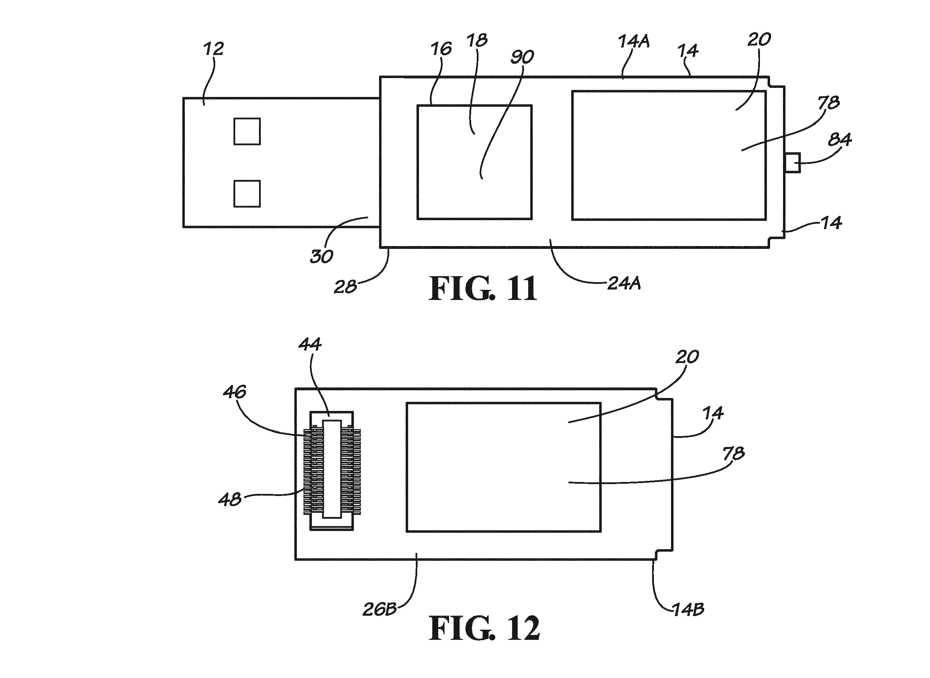

Figures 1-12 illustrate features of an external device 10 that is compatible with multiple interface connection standards. In the features shown in Figures 1-12, the device 10 comprises at least one connector 12, a plurality of substrates 14, a first interface connection controller 16, a second interface connection controller 18, at least one memory die stack 20, and a display 22.

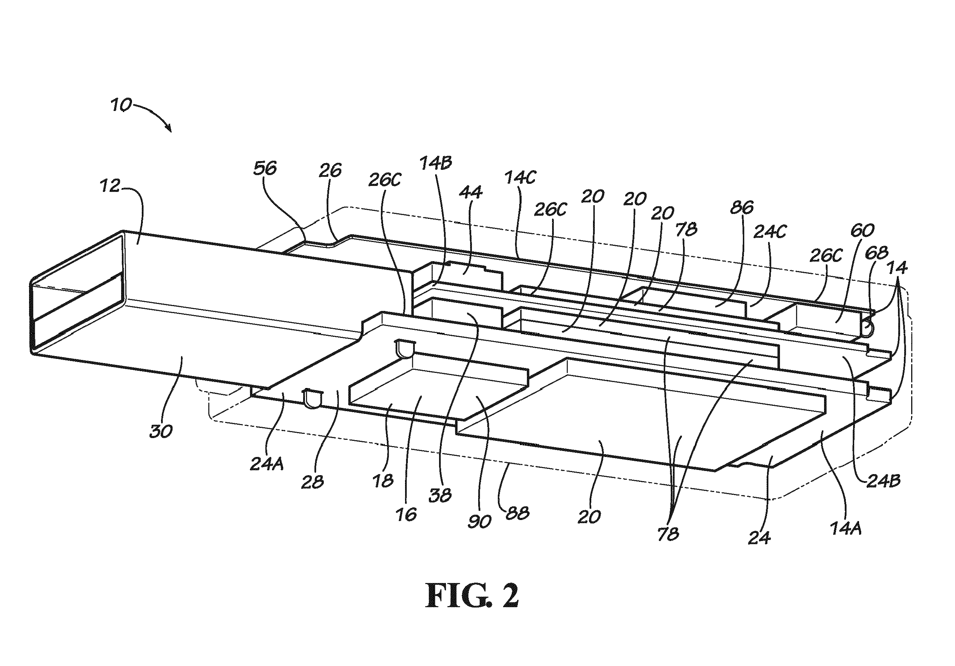

As best shown in Figures 2-12, the substrates 14 may be printed circuit boards ("PCB"), which are used to mechanically support and electrically connect the other components of the device 10. In some features, the substrates 14 may each include a component surface 24 and a connection surface 26. Items such as light emitting diodes 94 ("LEDs"), oscillators, discrete components, or other suitable devices, may be mounted and electrically coupled to the component surface 24 and/or the connection surface 26.

In some features, as illustrated in Figures 2-5 and 7-10, the connector 12 may be positioned proximate an end 28 of a first substrate 14A of the plurality of substrates 14 and configured to be inserted within a corresponding connector. In some features, a lower surface 30 of the connector 12 is mechanically coupled and electrically connected to a connection surface 26A of the first substrate 14A. In certain features, the connector 12 may be configured to couple to a corresponding USB 2.0 connector, USB 3.0 connector, and/or eSATA connector or other suitable serial bus connection, parallel bus connection, or otherwise as desired. In some features, a first interface connection standard is a USB 2.0 or USB 3.0 standard or any other standard that is forward or backwards compatible with any of the foregoing USB standards, and a second interface connection standard is an eSATA I, eSATA II, eSATA III, or any other standard that is forward or backwards compatible with any of the foregoing eSATA standards. However, one of ordinary skill in the relevant art will understand that the two interface connection standards may be any suitable combination of interface connection standards that achieve the desired performance of the device 10.

In some features, as shown in Figures 2-3 and 5-12, the device 10 may utilize the same connector 12 for both the first interface connection standard and the second interface connection standard or may use separate connectors 12 configured for each type of connection. The connector may have a substrate, a first interface connection terminal set electrically coupled to the substrate, a second interface connection terminal set electrically coupled to the substrate, a third interface connection terminal set electrically coupled to the substrate, a housing coupled to the substrate and surrounding at least a portion of the first interface connection terminal set, the second interface connection terminal set, and the third interface connection terminal set, and a shell coupled to the housing and the substrate, wherein the first interface connection terminal set and the second interface connection terminal set are configured to support at least two interface connection standards with interfaces that are mechanically different. In certain features, the shell is metal.

The first interface connection terminal set may comprise a plurality of connection fingers. The second interface connection terminal set may comprise a plurality of springs. In certain features, the substrate comprises a plurality of apertures, wherein each of the plurality of springs of the second interface connection terminal set are partially enclosed within each of the plurality of apertures. The third interface connection terminal set may comprise a plurality of springs. In some features, the housing comprises a plurality of channels, wherein each of the plurality of springs of the third interface connection terminal set are partially enclosed within each of the plurality of channels.

In some features, a recess may be positioned between a lower surface of the housing and a component surface of the substrate. At least one controller may also be electrically coupled to the substrate. The controller may be at least partially surrounded by the housing and/or may be positioned within a recess, which is positioned between a lower surface of the housing and a component surface of the substrate. In some features, a second substrate 14B may be mechanically coupled and electrically connected to the connection surface 26A of the first substrate 14A. In these features, a coupling projection 32 may be mechanically mounted and electrically connected to the connection surface 26A. Ends 34 of connectors 36 may be positioned on the coupling projection 32 to connect the first substrate 14A to the second substrate 14B. Likewise, a reciprocal coupling projection 38 may be mechanically mounted and electrically connected to a component surface 24B of the second substrate 14B. In certain features, ends 40 of connectors 42 are positioned on the reciprocal coupling projection 38 to connect the first substrate 14A to the second substrate 14B. The coupling projections 32, 38 may include snap-fit, locking tabs, friction fit, or other suitable mechanical fastening devices that lock the two coupling projections 32, 38 in place when pressed together. The locations of the ends 34, 40 are configured so that the ends 34, 40 are in contact and the two substrates 14A, 14B are electrically connected when the coupling projections 32, 38 are coupled.

In some features, a third substrate 14C may be mechanically coupled and electrically connected to a connection surface 26B of the second substrate 14B. In these features, a coupling projection 44 is mechanically mounted and electrically connected to the connection surface 26B. Ends 46 of connectors 48 may be positioned on the coupling projection 44 to connect the second substrate 14B to the third substrate 14C. Likewise, a reciprocal coupling projection 50 may be mechanically mounted and electrically connected to a component surface 24C of the third substrate 14C. In certain features, ends 52 of connectors 54 are positioned on the reciprocal coupling projection 50 to connect the second substrate 14B to the third substrate 14C. The coupling projections 44, 50 may include snap-fit, locking tabs, friction fit, or other suitable mechanical fastening devices that lock the two coupling projections 44, 50 in place when pressed together. The locations of the ends 46, 52 are configured so that the ends 46, 52 are in contact and the two substrates 14B, 14C are electrically connected when the coupling projections 44, 50 are coupled.

In certain features, as shown in Figures 2-5 and 7-9, the third substrate 14C may be shaped so that an end 56 may be positioned proximate an upper surface 58 of the connector 12. The third substrate 14C may be mechanically coupled to the upper surface 58 or may positioned adjacent thereto without the addition of mechanical or chemical fasteners, depending the need for stabilization and security of the assembled device 10.

The third substrate 14C may further include a second coupling projection 60, which may also be mechanically mounted and electrically connected to the component surface 24C. The coupling projection 60 may be configured to connect the third substrate 14C to the display 22. A first end 66 of a film cable 68 is mechanically mounted and electrically connected to the display 22. In certain features, a second end 76 of the film cable 68 is coupled to the coupling projection 60. The coupling projection 60 and the second end 76 may include snap-fit, locking tabs, friction fit, or other suitable mechanical fastening devices that lock the coupling projection 60 and the second end 76 in place when pressed together. The coupling projection 60 and the second end 76 are configured so that the third substrate 14C and the display 22 are electrically connected when the coupling projection 60 and the second end 76 are coupled.

According to certain features, as shown in Figures 2-9, the film cable 68 may provide flexibility for the display 22 to be positioned adjacent the connection surface 26C of the third substrate 14C, while being electrically connected to the component surface 24C of the third substrate 14C. The display 22 may be e-Paper, Bi-Stable LCD, other electrophoretic displays, cholesteric LCD displays, interferometric modulation, or other similar technology that is capable of achieving the desired functions of the display 22. One of ordinary skill in the relevant art will understand and appreciate that electronic paper, e-paper, electronic ink, and the like are a range of display technology that are designed to mimic the appearance of ordinary ink on paper. For example, the display 22 may be used as a user interface, including but not limited to the capability to show graphics, diagnostics messages, etc. The display 22 may also be used for labeling items associated with the USB storage, including but not limited to dates, contents, backup information, and technical data such as storage capacity, remaining capacity, used capacity, etc. In some features, the use of an e-Paper, Bi-Stable LCD, or other similar technology creates a possibility to label the device 10 in a way so that the display 22 is readable without power when the device 10 is not connected to a computer or other similar device. As a result, a battery (rechargeable or otherwise) is not needed inside the device 10 for the display 22 to be visible when the device 10 is not connected. Thus, the labeling display is still readable without any battery power when the device 10 is not connected.

The first interface connection controller 16 and/or the second interface connection controller 18 may be mechanically mounted and electrically connected to the component surface 24A of the first substrate 14A, as shown in Figures 2, 5, 7, and 11. The first interface connection controller 16 and the second interface connection controller 18 may be combined within a single controller unit or may be separate units, depending on the particular requirements of the device 10. One of ordinary skill in the relevant art will understand that any suitable location of the first interface connection controller 16 and the second interface connection controller 18 on the component surfaces 24 and/or connection surfaces 26 of any of the substrates 14 may be utilized to achieve the desired performance of the device 10.

With respect to the memory, the at least one memory die stack 20 may be mechanically mounted and electrically connected to at least the one of the substrates 14. In some features, a single memory die stack 20 may be mounted to and electrically coupled to one of the substrates 14. In other features, more than one memory die stack 20 may be mounted to and electrically coupled to one, more than one, or all of the substrates 14. In some features, multiple memory die stacks 20 may be arranged opposite one another so that the memory die stacks 20 are equally distributed on the component surface 24 and the connection surface 26 of the first substrate 14A. For example, as shown in Figures 2, 5-8, each memory die stack 20 is mounted to and electrically coupled to each of the component surfaces 24A, 24B and the connection surfaces 26A, 26B of the first and second substrates 14A, 14B. In other features, more than one memory die stack 20 may be arranged adjacent one another so that the memory die stacks 20 are positioned on the same surface of one, more than one, or all of the substrates 14. One of ordinary skill in the relevant art will understand that any suitable location and distribution of memory die stacks 20 on the component surfaces 24 and/or connection surfaces 26 of any, some, and/or all substrates 14 may be utilized to achieve the desired performance of the device 10.

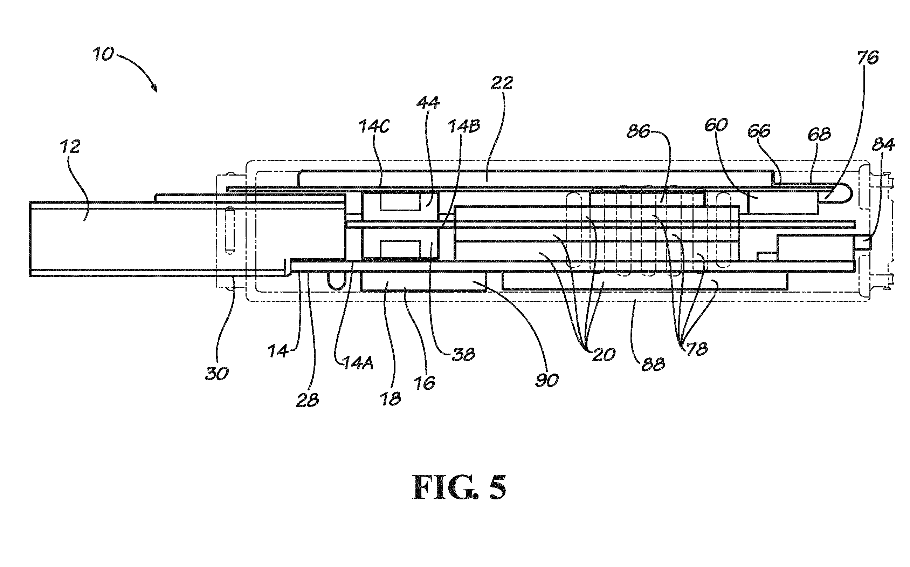

In these features, such as the features best illustrated in Figures 5-8, the memory die stack 20 may include at least one die 78, two dies 78, or even four dies 78, within each memory die stack 20. Each die 78 may be electrically connected to the first interface connection controller 16 and/or the second interface connection controller 18. In features where a single memory die stack 20 includes two dies 78, the design may include dual channel processing. With a dual channel configuration, the first interface connection controller 16 or the second interface connection controller 18 (depending on which one is enabled at the time) may access each die 78 together or separately. As a result, transactions may be executed twice as fast with dual channel processing. The type of channel configuration is dependent upon on the number of dies 78 within a memory die stack 20 and the number of memory die stacks 20 included in the device 10 (i.e., 2 dies/stack and 2 stacks/stick is a quad channel configuration, 2 dies/stack and 4 stacks/stick is an eight channel configuration, 2 dies/stack and 8 stacks/stick is a sixteen channel configuration, and so on). One of ordinary skill in the relevant art will understand that the memory die stack 20 may include 1, 2, 4, or any suitable number of dies 78 to achieve the desired performance of the device 10.

Possible arrangements of memory die stacks 20 on substrates 14, as well as dies 78 within each memory die stack 20, the memory die stack may be mounted to the component surface or a connection surface of the substrate. In some features, the external storage device further comprises a plurality of memory die stacks. In these features, at least one of the memory die stacks is attached to a connection surface of the substrate, and at least one of the memory die stacks is attached to a component surface of the substrate. The memory die stacks may each comprise a plurality of dies. In some features, at least two of the memory die stacks are stacked in an overlapping arrangement.

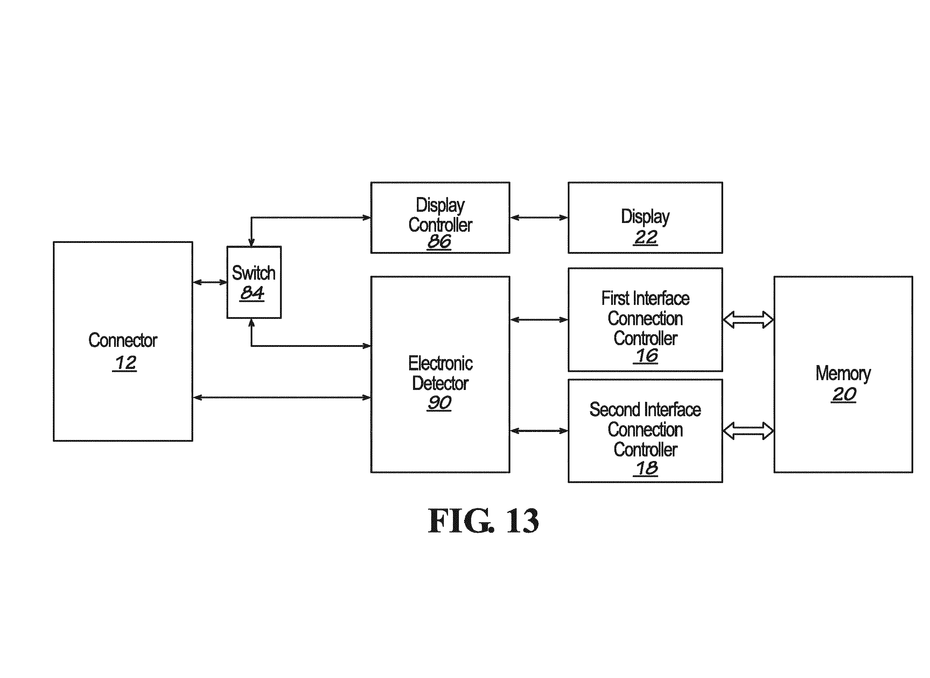

As described in Figure 13, in some features, a switch 84 may be included with the device 10 to manage the first interface connections within the connector 12, eliminating the need for a hub 92 for the first interface connections. By eliminating the need for the hub 92, the size of the device 10 may be reduced and the product may be more cost-effective.

The switch 84 allows the operator to choose between operating the display 22 and accessing the memory via the first interface connections within the connector 12. As will be explained in more detail below, because the second interface connections within the connector 12 may not be associated with operation of the display 22, memory operation by the second interface connections within the connector 12 may be possible even when the switch 84 is set to operate the display 22.

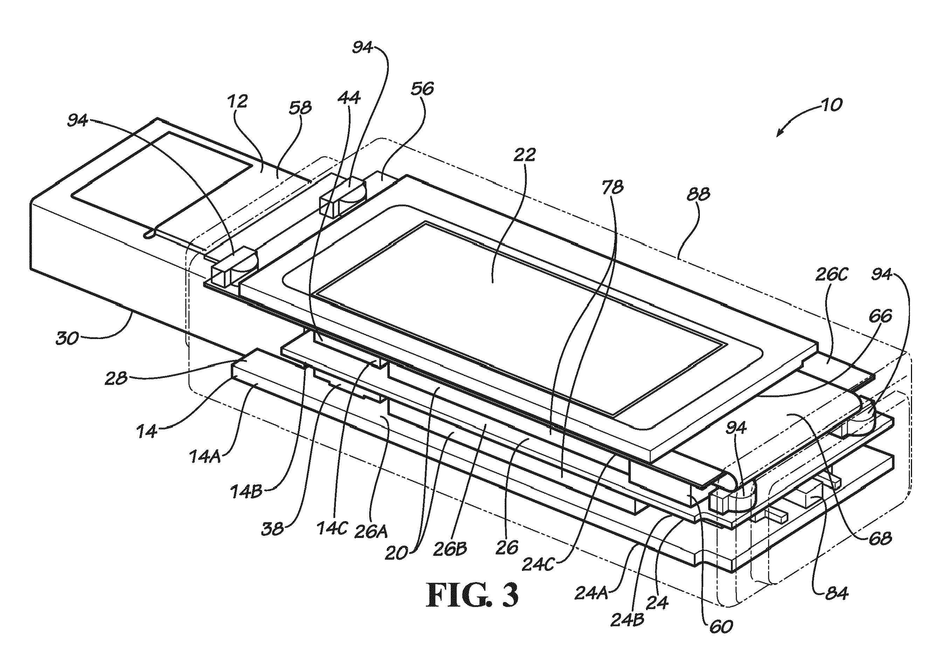

As shown in Figures 3, 5-8, and 10, the switch 84 may be mechanically mounted and electrically connected to the connection surface 26A of the first substrate 14A. However, one of ordinary skill in the relevant art will understand that the switch 84 may be positioned on any surface 24, 26 of any substrate 14 or other suitable location that is convenient and accessible to the user. The first interface connectors within the connector 12 may be electrically connected to the switch 84. When the switch 84 is set to operate the display 22, the switch 84 completes an electrical connection between the first interface connectors within the connector 12 and a display controller 86. The display controller 86 may be mechanically mounted and electrically connected to the component surface 24C of the third substrate 14C. However, one of ordinary skill in the relevant art will understand that the display controller 86 may be positioned on any surface 24, 26 of any substrate 14 or other suitable location.

When the switch 84 is set to access the memory, the switch 84 completes an electrical connection between the first interface connectors within the connector 12 and an electronic detector 90. In some features, the electronic detector 90 may be mechanically mounted and electrically connected to the component surface 24A of the first substrate 14A, as shown in Figures 2, 5, 7, and 11. The electronic detector 90, the first interface connection controller 16 and/or the second interface connection controller 18 may be combined within a single controller unit or may be separate units, depending on the particular requirements of the device 10. One of ordinary skill in the relevant art will understand that any suitable location of the electronic detector 90 on the component surfaces 24 and/or connection surfaces 26 of any of the substrates 14 may be utilized to achieve the desired performance of the device 10.

Regardless of the switch 84 setting, the second interface connectors within the connector 12 may be electrically connected to the electronic detector 90. Thus, in this arrangement, because the switch 84 is not part of the circuit between the second interface connectors within the connector 12 and the electronic detector 90, the memory may be accessed via the second interface connectors within the connector 12 so long as the electronic detector 90 enables the second interface connection controller 18, as is explained in more detail below.

The electronic detector 90 is in turn electrically connected to the first interface connection controller 16 and the second interface connection controller 18. However, the electronic detector 90 is configured to detect the presence of a second interface connection. In some features, the electronic detector 90 is configured to detect the presence of an eSATA connection. One of ordinary skill in the relevant art will understand that the electronic detector 90 may be configured to detect any suitable interface connection standard. If the electronic detector 90 detects the presence of a second interface connection, the electronic detector 90 enables the second interface connection controller 18. Otherwise, the electronic detector 90 enables the first interface connection controller 16. The use of the electronic detector 90 avoids situations where connection may include both the first and second interface connection standards, which, without the electronic detector 90, may result in situations where both controllers 16, 18 are operating in conflict.

The first interface connection controller 16 and the second interface connection controller 18 may be electrically connected to the memory die stacks 20 via 2, 4, 8, or 16 channel configuration, as described above.

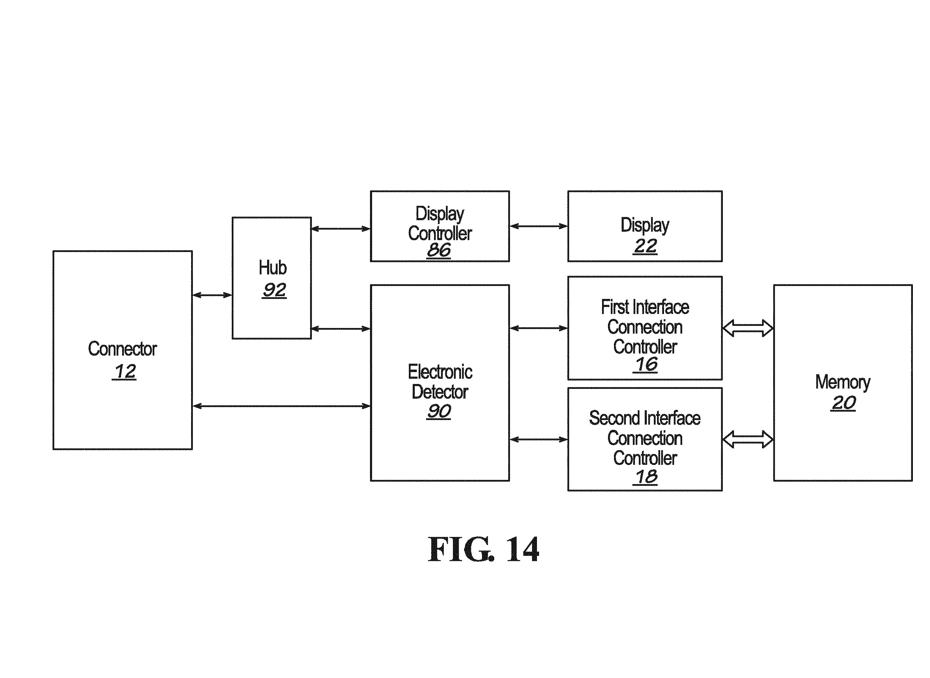

As described in Figure 14, in some features, the hub 92 may be included with the device 10 to manage the first interface connections within the connector 12, eliminating the need for the switch 84 for the first interface connections. By including the hub 92, the display 22 may be updated even when the memory is accessed via the first interface connectors within the connector 12, and no switch 84 is needed to move between operations.

In these features, the first interface connectors within the connector 12 may be electrically connected to the hub 92, which may be mechanically mounted and electrically connected to the connection surface 26A of the first substrate 14A. However, one of ordinary skill in the relevant art will understand that the hub 92 may be positioned on any surface 24, 26 of any substrate 14 or other suitable location.

The hub 92 completes an electrical connection between the first interface connectors within the connector 12 and the display controller 86, as well as completing an electrical connection between the first interface connectors within the connector 12 and the electronic detector 90. The electronic detector 90, the first interface connection controller 16, the second interface connection controller 18, and the at least one memory die stack 20 are electrically connected as described above in the features that include the switch 84.

In the various features described herein, an outer casing 88 may be included to enclose the assembled substrates 14, display 22, and various components. In some features, the outer casing 88 may be snap-fit, injection molded, or otherwise assembled around the assembled substrates 14, display 22, and various components.

The foregoing is provided for purposes of illustrating, explaining, and describing features of the present invention. Further modifications and adaptations to these features will be apparent to those skilled in the art and may be made without departing from the scopeof the invention.

## Claims

1. An external device comprising:
(a) a plurality of substrates (14);
(b) a connector (12) electrically coupled to one of the plurality of substrates and comprising first interface connectors and second interface connectors;
(c) a hub (92) or a switch (84) electrically coupled to one of the plurality of substrates and to the first interface connectors,
(d) a first interface connection controller (16) electrically coupled to one of the plurality of substrates;
and,
(e) a second interface connection controller (18) electrically coupled to one of the plurality of substrates and to the second interface connectors;
wherein the first interface connectors and the second interface connectors are configured to support at least two interface connection standards with interfaces that are mechanically different.

2. An external device as claimed in claim 1, further comprising:
a) a display controller (86) electrically coupled to one of the plurality of substrates and to the hub (92) or the switch (84);
and,
b) a display (22) electrically coupled to the display controller.

3. An external device as claimed in claim 2, wherein:
a) the switch (84) comprises a display position and a memory position;
b) the first interface connection controller (16) is electrically coupled to one of the plurality of substrates (14) and to the memory position of the switch:
and,
c) the display controller (18) is electrically coupled to one of the plurality of substrates and to the display position of the switch.

4. An external device as claimed in any of claims 1 to 3, further comprising an electronic detector (90), wherein the first interface connection controller (16) and the second interface connection controller (18) are electrically coupled to the electronic detector.

5. An external device as claimed in claim 4, wherein the electronic detector (90) is configured to enable the second interface connection controller (18) when a second interface connection is present.

6. An external device as claimed in any of claims 2 to 5, wherein information displayed on the display (22) is visible when the connector (12) is not connected to a corresponding connector.

7. An external device as claimed in any of claims 2 to 6, wherein the display (22) is a bi-stable LCD or e-Paper device.

8. An external device as claimed in any of claims 1 to 7, wherein the first interface connectors are USB 3.0 connectors.

9. An external device as claimed in any of claims 1 to 8, wherein the second interface connectors are eSATA connectors.

10. An external device as claimed in any of claims 1 to 9, wherein:
a) the plurality of substrates (14) are arranged in a stacking relationship;
and,
b) each substrate is mechanically mounted and electrically coupled to at least one other substrate in the plurality of substrates.
